# EUROPEAN PATENT SPECIFICATION

(11) **EP 2 691 488 B1**
(45) Date of publication and mention of the grant of the patent: **07.03.2018**
(21) Application number: 12712405.5
(22) Date of filing: 27.03.2012
(51) Int. Cl.: C09J 103/02, C09J 189/00, G09F 3/10

(54) **AQUEOUS ADHESIVE COMPOSITIONS**
WÄSSRIGE KLEBSTOFFZUSAMMENSETZUNGEN
COMPOSITIONS ADHÉSIVES AQUEUSES

(30) Priority: 29.03.2011 EP 11002574
(43) Date of publication of application: 05.02.2014
(73) Proprietor: Paramelt Veendam B.V., 9241 KN Veendam (NL)
(72) Inventor: LEVECKE, Bart, 3018 Wijgmaal-Leuven (BE); LIPKENS, Heiko, 3018 Wijgmaal-Leuven (BE)
(74) Representative: Nederlandsch Octrooibureau
(86) International application number: PCT/NL2012/050198
(87) International publication number: WO 2012/134281

(56) References cited:
- EP-A1- 2 354 205
- EP-A2- 0 080 141
- WO-A2-01/85866
- GB-A- 645 461
- US-A1- 2007 240 823
- Rasmussen ET AL: "Human Cts -casein: purification and characterization", Comp. Biochem. PhysioL, 1 January 1995 (1995-01-01), pages 75-81, XP55020808, Retrieved from the Internet: URL:http://pdn.sciencedirect.com/science?_ ob=MiamiImageURL&_cid=271337&_user=987766& _pii=030504919400225J&_check=y&_origin=art icle&_zone=toolbar&_coverDate=31-May-1995& view=c&originContentFamily=serial&wchp=dGL bVBA-zSkzV&md5=e9fb187d0217a89c4b54997ed13 c755e/1-s2.0-030504919400225J-main.pdf [retrieved on 2012-03-02]

## Description

The present invention relates to aqueous adhesive compositions, in particular labeling adhesives, methods for their preparation and the use of said adhesives for applying labels to containers, in particular bottles.

It is well known in the art to use adhesives for mechanically fixing labels on various containers, such as glass or plastic containers, in particular bottles. Suitable adhesives can be classified in at least two classes. On one hand, there are so called hotmelt adhesives which are generally understood to be waterfree, solventless adhesives. On the other hand, solvent-based, in particular aqueous, adhesives compositions are widely in use.

In particular, starch- and casein-based adhesives represent a simple aqueous adhesive system for mechanical labeling and generally form bonds with a good resistance to condensation. However, both during the processing stage, that means the labeling process itself and on the finished labeled product in its ready-to-use and after-use state quite a number of different requirements have to be met by the labeling adhesives. During the labeling process the adhesive must be able to flow sufficiently, that means shall be characterized by acceptable machine running properties, while simultaneously providing good adhesive properties in order to be processed in a very high speed on highly automated labeling machines. Thus, the adhesive must both be characterized by a comparable low viscosity to be properly processed but in addition should have an initial high adhesive force to prevent displacement during or after processing. The situation is even more complicated by the specific conditions an adhesive is experiencing when being adhered to filled bottles, in particular soft drinks or beer bottles. During beer bottling, cold beer is filled into bottles of higher temperature regularly resulting in the formation of condensation water on the bottle surface. Thus, the adhesive must be able to very rapidly stick on said wet surface and must therefore show a considerable water resistance. Further, in particular in hot countries, the adhesive must be able to withstand various challenging atmospheric and storage conditions. Storing of the labeled containers, for instance in ice water, requires a very high water resistance for the label being attached to the bottle. Moreover, an adhesive should be able to be used in automatic labeling procedures in an efficient splash- and waste-avoiding manner. Finally, an adhesive should be able to be easily removed after usage of the container.

GB 1,125,926 discloses casein-based adhesives for labeling glass and plastic bottles comprising casein, water, a casein liquefier and certain water soluble gums, which are considered to be critical and are selected from the group consisting of gum karaya, Irish moss and gum tragacanth.

EP 0 597 920 B1 discloses casein-based aqueous adhesives comprising casein, starch components, resin acids, resin acid esters or resin alcohols, liquefier and borax, which is disodiumtetraborate.

EP 0 080 141 B1 discloses aqueous adhesive compositions useful for labeling bottles comprising a starch component and flow regulating additives comprising at least one hydroxyalkyl ether of oxidized starch and at least one polymer, for instance casein. The casein based adhesives disclosed therein comprise a liquefier, namely urea, and borax.

Borax, however, is suspected to have reprotoxic properties and to cause irritations or even diseases of the human body. In particular, Borax was recently added to the substances of very high concern (SVHC) list of REACH (Regulation (EC) No. 1907/2006).

Thus, the technical problem underlying the present invention is to provide a solvent-based composition suitable as a labeling adhesive and a method for its preparation which overcomes the above-identified problems, in particular which is free of health concerns for its users, provides a good pumpability, flowability and high tackiness during the processing stage, is substantially waste- and splash-free processable, preferably is ice water resistant, and is able to be easily and quickly removed from a labeled container.

The present invention solves its underlying technical problem by the provision of an aqueous adhesive composition for labeling, in particular mechanical labeling, comprising a) at least one protein component, b) at least one primary beta (β)-alcohol amine with at least two hydroxyl groups, and c) water.

The present aqueous adhesive composition can advantageously be used for mechanically labeling containers, in particular bottles, in particular glass or plastic bottles, preferably PET bottles. The present adhesive compositions can advantageously be used in cases, where the outer surfaces of the containers to be labeled are cold and wet, such as in breweries or other beverage factories. The present aqueous adhesive compositions are characterized by a very good tackiness, in particular high wet tackiness, pumpability and flowability, especially at the application temperature of the adhesive, which allow the labeling of glass and plastic containers in high speed machines with extremely high labeling rates. The present aqueous adhesive compositions can provide a high water resistance during processing, that means when the adhesive is applied to a cold, for instance having a temperature in the range of from 2 to 15 °C, and wet surface of the containers, in particular bottles, the composition can immediately establish a firm contact between the label and the surface of the container and does hardly or even not at all slip during further processing or thereafter. The present compositions can have such a high tack and a fast rate of set even at low viscosity. Further, the present adhesive aqueous compositions can be short-breaking, that means they do not stringe.
The present aqueous adhesive compositions can enable a very clean, substantially splash-free processing and can be easily cleaned from the labeling machines. Despite its high wet tackiness the present composition, however, still allows the removal of the label without damaging the container.

In the context of the present invention, the term "comprising" is understood to have the meaning of "including" or "containing". As an example this means that if a composition is said to comprise a first component, it in addition to said explicitly mentioned - first - component may contain a further second component.

It is furthermore to be understood that in case a relative quantitative, in particular numerical definition of a composition is given, the relative numerical values of its components add up to 100% of said composition unless where noted otherwise.

The adhesive composition of the present invention comprises at least one amino alcohol that is a primary beta (β)-alcohol amine. As meant herein, the term amino alcohol means an alcohol, i.e. an organic compound having at least one hydroxyl group attached to a carbon atom, having at least one amino group attached to a carbon atom. As meant herein, the term beta (β)-alcohol amine or β-alcohol amine means that the at least one amino group and the at least one hydroxyl group are attached to two different carbon atoms, whereby these two carbon atoms are directly attached to each other. Moreover, in a β-alcohol amine, there is no carbon atom that has both a hydroxyl group and an amino group attached to it. The at least one beta (β)-alcohol amine is a primary beta (β)-alcohol amine. This means that the at least one amino group is a primary amino group. The primary beta (β)-alcohol amine has at least two hydroxyl groups. In a preferred embodiment of the present invention, the amino alcohol is an organic primary amine with two or more preferably three hydroxyl groups. In one preferred embodiment, the amino alcohol of the present invention comprises as functional groups solely the amino and the hydroxyl groups and no other functional groups, in particular no carboxyl groups. In a particularly preferred embodiment of the present invention, the at least one primary beta (β)-alcohol amine is TRIS (tris (hydroxymethylaminomethane) or AEPD (2-amino-2-ethy1-1,3-propanediol).

Advantageously, the at least one primary beta (β)-alcohol amine functions as a buffer. Preferably, the at least one primary beta (β)-alcohol amine does not negatively influence or may even contribute positively to the stability of the viscosity of the aqueous adhesive composition. Furthermore, the at least one primary beta (β)-alcohol amine preferably does not negatively influence or may even contribute positively to the tack, i.e. the direct adhesion power, of the adhesive composition.

In a preferred embodiment of the present invention, the aqueous adhesive composition of the present invention comprises 0.05 to 10 weight %, preferably 0.05 to 2.5 weight %, preferably 0.2 to 2.5 weight %, preferably 1.2 to 10 weight %, preferably 1.2 to 5 weight %, in particular 1.2 to 2.5 weight % (each based on total weight of composition) of the at least one primary beta (β)-alcohol amine.

In a particular preferred embodiment of the present invention, the protein component is a protein, in particular an acid precipitated protein. In the context of the present invention acid precipitated protein is meant to refer to protein, which has been precipitated by the addition of an acid, for instance sulphuric acid, lactic acid or hyperchloric acid. In a preferred embodiment, the protein is of animal origin, such as for example casein, gelatin, whey protein, or the protein is of vegetal origin, such as for example soy protein in the form of soy protein isolate or soy protein concentrate, wheat protein, rice protein or maize protein. In a particularly preferred embodiment of the present invention, the at least one protein is casein. The casein is preferably acid precipitated casein. In a particularly preferred embodiment of the present invention, the at least one protein is soy protein.

In a preferred embodiment, the protein, in particular casein, comprises water, for instance 5 to 10 weight % (based on total weight of casein).

In a preferred embodiment of the present invention, the aqueous adhesive composition of the present invention comprises 2 to 40 weight %, preferably 5 to 40 weight %, preferably 6 to 35 weight %, in particular 7 to 30 weight % (each based on total weight of the composition) of the at least one protein component. In a preferred embodiment of the present invention, the aqueous adhesive composition comprises 5 to 15 weight %, preferably 6 to 12 weight %, in particular 5 to 10 weight % (each based on total weight of the composition) of the at least one protein component. In a furthermore preferred embodiment of the present invention, the aqueous adhesive composition comprises 16 to 40 weight %, in particular 16 to 25 weight %, in particular 17 to 23 weight % (each based on total weight of the composition) of the at least one protein component.

In a furthermore preferred embodiment of the present invention, the aqueous adhesive composition of the present invention comprises 25 to 75 weight %, preferably 30 to 70 weight %, in particular 35 to 65 weight %, in particular 40 to 60 weight % (based on total weight of the composition) water.

In a preferred embodiment of the present invention, the total solid content of the aqueous adhesive composition is from 25 to 75 weight %, in particular 30 to 70 % by weight (each based on total weight of the composition).

In a preferred embodiment, the present aqueous adhesive composition comprises at least one starch component. In the preferred embodiment such a starch component - which may act as an adhesion-bringing compound, as rheology- and/or viscosity modifier, as filler or as extender - may be a starch, a starch derivative, such as oxidized starch, a starch ether or a starch ester. In a preferred embodiment of the present invention, the starch component is starch.

In a preferred embodiment of the present invention, the aqueous adhesive composition comprises 1 to 40 weight %, preferably 2 to 35 weight %, in particular 5 to 30 weight % (each based on total weight of composition) of the at least one starch component.

In a furthermore preferred embodiment of the present invention, the aqueous adhesive composition comprises at least one antifoaming agent. In a particularly preferred embodiment, antifoaming agents are used selected from the group consisting of poly dimethyl siloxane emulsions, modified fatty acid derivatives and hydrocarbon mixtures.

In a preferred embodiment of the present invention, the aqueous adhesive composition comprises 0.1 to 5 weight %, in particular 0.2 to 4 weight %, preferably 0.5 to 3 weight % (each based on total weight of composition) of the at least one antifoaming agent.

The aqueous adhesive composition of the present invention comprises in a furthermore preferred embodiment at least one liquefier, hereinafter also called disperser or solubilizer. In a preferred embodiment of the present invention such a liquefier is selected from the group consisting of urea, thiourea, ammonium hydroxide, ammonium thiocyanate, dicyanodiamide and mixtures thereof.

In a preferred embodiment of the present invention, the aqueous adhesive composition comprises 1 to 30 weight %, in particular 2 to 40 weight %, preferably 5 to 20 weight % (each based on total weight of composition) of the at least one liquefier.

In a furthermore preferred embodiment of the present invention, the aqueous adhesive composition comprises at least one further additive, selected from the group consisting of a preservative, a filler, a colouring agent, a surfactant, a fragrance and a salt.

In a preferred embodiment of the present invention, the salt is an inorganic or organic salt, such as a citrate, acetate, halid, nitrate or sulphate.

In a preferred embodiment of the present invention, the salt is zinc sulphate, zinc acetate, zinc oxide or sodium fluoride. In a preferred embodiment of the present invention, the salt is zinc sulphate or sodium fluoride.

In a furthermore preferred embodiment of the present invention, the preservative is phenoxyphenol, sodium fluoride or an isothiazolinone derivative.

In a furthermore preferred embodiment of the present invention, the aqueous adhesive composition comprises no buffer except the at least one primary beta (β)-alcohol amine. In another embodiment of the present invention, however, in addition to the primary beta (β)-alcohol amine a buffer is present.

In a furthermore preferred embodiment of the present invention, the aqueous adhesive composition has a pH-value of 4.0 to 10.0, preferably 6.5 to 9.5, in particular 7.5 to 8.5, preferably 8.0 to 8.5.

In a furthermore preferred embodiment of the present invention the aqueous adhesive composition has a viscosity at 20°C at a shear rate of 40 s-1 of 10,000 to 100,000, in particular 30,000 to 90,000, most preferably 40,000 to 60,000 mPa.s.

In the preferred embodiment of the present invention, the viscosity is measured during a flow curve using a rheometer using a plate-plate geometry and a gap width of 0.5 mm.

In a preferred embodiment of the present invention, the aqueous adhesive composition is essentially borax-free. In a furthermore preferred embodiment of the present invention, the present aqueous adhesive composition comprises, compared to conventional borax- and protein-containing, in particular casein-containing, adhesive compositions, a reduced amount of borax, in particular reduced to 1 to 60 weight %, preferably to 2 to 20 weight % of the borax content (each weight % based on total weight of borax in the adhesive composition) as found in known protein-based labeling adhesives. In a preferred embodiment, the amount of borax is from 0.01 to 1.5 weight %, preferably 0.1 to 1.5 weight % borax (each based on total weight of the composition and whereby the borax is added in the decahydrate form).

The present invention solves its underlying problem also by providing a method for preparing the aqueous adhesive composition according to the present invention, comprising in a first process step a) combining the components of the aqueous adhesive compositions, in particular the at least one protein component, preferably casein, the at least one primary beta (β)-alcohol amine and water, optionally one or more components of the group selected from a starch component, a liquefier, a preservative, a filler, a colouring agent, a salt, a surfactant, a fragrance and an anti-foaming agent, so as to obtain an aqueous composition, in a second process step b) heating the obtained aqueous composition, in a third process step c) cooling the obtained aqueous composition and in a fourth process step d) adjusting the pH value and the viscosity of the composition obtained in process step c), so as to obtain the aqueous adhesive composition of the present invention.

In a preferred embodiment of the present invention, process step a) is conducted at a temperature from 15 to 35°C, preferably 20 to 30°C. In a furthermore preferred embodiment, process step a) is conducted under stirring of the components of the aqueous adhesive composition.

In a preferred embodiment the present invention, process step b) is conducted at a temperature from 50 to 95°C, preferably under stirring, for instance for 1 to 15 minutes.

In a preferred embodiment the present invention, the aqueous adhesive composition obtained in step c) is adjusted in process step d) to a pH value of preferably 4 to 10, in particular 6.5 to 9.5, in particular 7.5 to 8.5 and to a viscosity at a shear rate 40 s⁻¹ from 10,000 to 100,000 mPa.s, preferably from 30,000 to 90,000 mPa.s, in particular 40,000 to 60,000 mPa.s at 20° C and at a shear rate of 40 s⁻¹. Said adjustment may be carried out for instance with water and NaOH.

Thus, the present invention also provides an aqueous adhesive composition of the present invention which is furthermore characterized by a pH-value from 4.0 to 10.0, preferably 6.5 to 9.5, more in particular 7.5 to 8.5, which is furthermore characterized by a viscosity measured during a flow curve at a shear rate 40 s⁻¹ at 20° C of 10,000 to 100,000 mPa.s, preferably from 30,000 to 90,000 mPa.s, in particular 40,000 to 60,000 mPa.s.

The present invention also relates to a method for labeling containers, comprising the step of applying the aqueous adhesive composition according to the present invention to the back surface of a label and/or to the outer surface of a container, followed by the step of applying the label to the container.

The invention will now be described in more detail, in particular by way of the examples and the accompanying figures.

The figures show:
In Fig. 1 a graphical presentation of the viscosity stability of control formulations and inventive formulations; and

In Fig. 2 a graphical presentation of the tack (Pa) of control formulations and inventive formulations.

### Example

### A) Formulation and Preparation

Formulations according to the present invention named 1 (TRIS-containing) and 2 (AEPD-containing), and borax- and phosphate control formulations not according to the invention (named A and C, respectively) were prepared via the following protocol (per 100 g of glue): Add components to a container as given in Table 1:

**Table 1**

| | A (Borax) | C (Phosphate) | 1 (TRIS) | 2 (AEPD) |
|---|---|---|---|---|
| Water | 45.9 | 45.9 | 45.9 | 45.9 |
| Zinc sulphate | 0.2 | 0.2 | 0.2 | 0.2 |
| Urea | 11.5 | 11.5 | 11.5 | 11.5 |
| Sodium fluoride | 0.2 | 0.2 | 0.2 | 0.2 |
| Casein | 23.5 | 23.5 | 23.5 | 23.5 |
| Phenoxyphenol | 0.3 | 0.3 | 0.3 | 0.3 |
| Borax (decahydrtae) | 3.2 | - | - | - |
| TRIS | - | - | 0.32 | - |
| AEPD | - | - | - | 0.32 |
| Disodium phosphate | - | 3.2 | - | - |

All amounts in Table 1 are given in grams. The amount of grams of Borax in the decahydrate form equals 1.7 gram of disodium tetraborate.

Add NaOH 29% until the pH is 7.5 (this quantity is 0 g for the borax control and approximately 1.6 g for the primary beta (β)-alcohol amines TRIS and AEPD). Then heat the sample to 82°C and then allow to cool. Add 15.2 g water. The pH of the formulation is adjusted so that the pH reaches a value of 8.0 +/- 0.3 and the viscosity is adjusted with water until the viscosity at shear rate 40 s⁻¹ is between 54,000 and 58,000 mPa.s (0 - 3 g water and 0 - 0.5 g NaOH are added).

A further control formula named B with ammonia as neutralizing base was prepared, wherein no NaOH was added. The ammonia that was used was a 14 wt.% solution in water. The control formula has the composition and is prepared as follows:
Add following components to a container (per 100 grams glue):
   - Water 45.9 grams
   - Zinc sulphate 0.2 grams
   - Urea 11.5 grams
   - Sodium Fluoride 0.2 grams
   - Casein 23.5 grams
   - Ammonia 14% 6.7 grams
   - Phenoxyphenol 0.3 grams

Add 5.8 g ammonia until the formulation has a pH of 7.5. Then heat the glue until 82°C and allow to cool down. Add 9.37 g water. The pH of the formulation is adjusted to a value of 8.0 +/- 0.3 and the viscosity is adjusted until the viscosity at shear rate 40 s⁻¹ is between 54,000 and 58,000 mPa.s (0 g water and 1 g ammonia were added).

### B) Measurements

Determination of the rheology: Anton Paar Physica MCR 101 rheometer unit. Measuring temperature: 20°C. Measuring system: The configuration is plate/plate, with a spindle diameter of 25 mm and a gap of 0.5 mm.

Determination of the damping factor (also called "loss tangent"): The tan δ at different frequencies (including 10 Hz) was determined in the context of a frequency sweep at a shear strain of 1%, whereby the frequency decreased logarithmically from 30 Hz to 0.1 Hz in 50 steps.

Determination of the viscosity: The flow curve was determined with a pre-shear at 3 s⁻¹ during 60 seconds, followed by varying the shear rate from 10 s⁻¹ to 50 s⁻¹ in 30 seconds in steps of 10 s⁻¹ with the Anton Paar Physica rheometer identified above.

Determination of the tack was done with a texture analyser "TAXT Plus" from Stable Micro systems. A glue film of a thickness of 140 µm is applied to a surface and allowed to dry for 1 minute. Then, a cylindrical probe with diameter 2.5 cm is pressed into the still tacky adhesive until the probe experiences a force of 49 mN by the adhesive resisting impression. When this force is measured, the probe immediately withdraws and measures the force needed to pull away from the adhesive film. This is the tack of the adhesive and the tack is expressed in Pa, as the force needed to pull away from the adhesive film is divided by the surface area of the probe (0.000491 m²). During each measurement, the probe is pushed into the adhesive film 3 consecutive times. The measurement parameters were: Probe base height: 100 mm; Probe speed when lowering probe: 5 mm/sec; Probe speed when pressing into adhesive film: 1 mm/sec; Probe speed after feeling resistance of 49 mN and withdrawing to base height: 10 mm/sec.

### C) Results

The results are provided below for: (1) evolution of pH; (2) damping factor; (3) viscosity stability, and (4) tack measurements.
1. The evolution of the pH of the formulations over the course of a two-month period is given in Table 2:

**Table 2**

| | A (Borax) | B (Ammonia) | C (Phosphate) | 1 (TRIS) | 2 (AEPD) |
|---|---|---|---|---|---|
| Initial pH ('d0') | 8.13 | 8.1 | 8.05 | 7.99 | 8.24 |
| pH after one month ('m1') | 7.98 | 7.95 | 8.32 | 7.82 | 8.03 |
| pH after two months ('m2') | 8.03 | 8.29 | 8.34 | 8.17 | 8.38 |
| Difference: m2 - d0 | -0.1 | 0.19 | 0.29 | 0.18 | 0.14 |

Thus, the pH stability of the inventive formulations is high. This indicates that the formulations according to the invention fulfill this important criterion.
2. The rheology profile of the inventive and control formulations is similar, in particular regarding flow curve. The frequency sweeps after one week gave the following results:
The borax and ammonia control had at 10 Hz a damping factor around or higher than 2, while the damping factor at 10 Hz of the inventive formulations, namely the TRIS and AEPD formulations, was around 1.7 and for the phosphate control at around 1.4. Table 3 shows the value of the loss tangent at 10 Hz at a sample age of one week.

**Table 3**

| | A (Borax) | B (Ammonia) | C (Phosphate) | 1 (TRIS) | 2 (AEPD) |
|---|---|---|---|---|---|
| tan δ at 10 Hz | 1.962 | 2.185 | 1.485 | 1.838 | 1.714 |

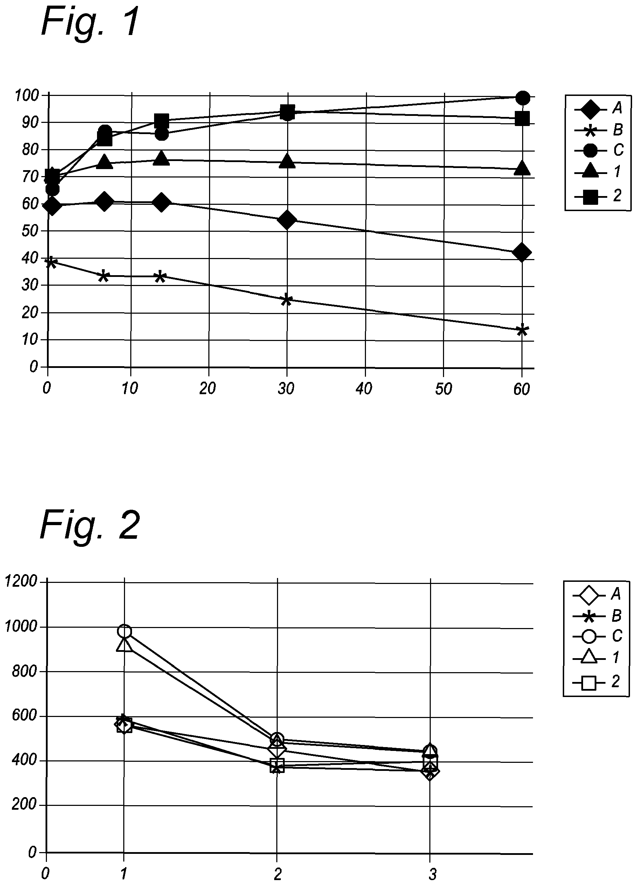

3. Figure 1 shows the viscosity stability of the three control formulations not according to the invention comprising borax, ammonia or phosphate buffer in comparison to the inventive formulations comprising TRIS and AEPD. Table 4 indicates the specific values obtained for a two-month time period.

The data show that the controls A, B, and C have a relatively low viscosity stability after 60 days, as evidenced by the big deviations from the original value. This shows that the mere functioning as a buffer, such as the phosphate in C, does as such not yet mean that a compound is suitable for optimal use in an adhesive formulation. By contrast, the inventive formulations 1 and 2 show quite a high stability over a long period of time.

The formulation of the ammonia control was not viscous enough; this was further evidenced by the fact that the initial viscosity at a shear rate 40 s⁻¹ was only about 30,000 mPa.s.

**Table 4**

| | A (Borax) | B (Ammonia) | C (Phosphate) | 1 (TRIS) | 2 (AEPD) |
|---|---|---|---|---|---|
| Viscosity at day 1 | 59.13 | 39.81 | 66.62 | 70.85 | 71.11 |
| Viscosity after one week | 61.71 | 33.32 | 87.22 | 74.88 | 84.93 |
| Viscosity after two weeks | 61.45 | 33.74 | 86.81 | 76.35 | 91.0 |
| Viscosity after one month | 54.03 | 26.01 | 93.1 | 75.33 | 93.76 |
| Viscosity after two months | 42.93 | 15.55 | 99.27 | 72.02 | 92.42 |

The data on viscosity in Table 4 was determined at a shear rate of 10 s⁻¹, and is given in Pa.s.
4. The results of the tack measurements are given in Table 5 and Figure 2. The x-axis in Figure 2 represents the withdrawal number, i.e. 1 to 3. The y-axis, expressed in Pa, represents the force measured to withdraw a probe with a specified surface area from a wet glue film. The probe is pushed into the glue film first (X=1) and then withdrawn and the force needed to "pull" the probe out of the sticky glue is measured. Then, the probe is pushed again into the glue film (X=2) and the force is measured again. This is repeated a third time.

Figure 2 and Table 5 show that after three "pushes in the film" and withdrawals, the difference between the glues disappears. The first "push" gives the biggest difference and two buffers give the most tack: TRIS and phosphate. The difference between the other glues is minimal.

In practice, it is within a range of 200 to 4000 Pa beneficial if the tack is higher, thus approaching the 4000 Pa level. Above the 4000 limit however it was found that in a container labeling process, the labels adhere too strongly.

Taken together, TRIS and AEPD provide a tack that is at least comparable to the conventional adhesives, which tack is sufficient but also not too high to be used in a labeling process for containers.

**Table 5**

| Withdrawal # | A (Borax) | B (Ammonia) | C (Phosphate) | 1 (TRIS) | 2 (AEPD) |
|---|---|---|---|---|---|
| 1 | 569 | 589 | 969 | 924 | 562 |
| 2 | 455 | 385 | 492 | 510 | 384 |
| 3 | 355 | 355 | 448 | 447 | 400 |

All values in Table 5 are Tack values, expressed in Pa.

## Claims

1. An aqueous composition, wherein said composition comprises:
a) 2 to 40 weight %, based on total weight of composition, of at least one protein component,
b) at least one primary beta (β)-alcohol amine with at least two hydroxyl groups, and
c) water.

2. The composition according to claim 1, wherein the primary beta (β)-alcohol amine is TRIS (tris (hydroxymethyl-aminomethane) or AEPD (2-amino-2-ethyl-1,3-propanediol).

3. The composition according to claim 1 or 2, which comprises at least one starch component.

4. The composition according to any one of the preceding claims, which comprises at least one antifoaming agent.

5. The composition according to any one of the preceding claims, which comprises at least one liquefier selected from the group consisting of urea, ammonium hydroxide, ammonium thiocyanate, thiourea and dicyanodiamide

6. The composition according to any one of the preceding claims, wherein the protein component is selected from the group consisting of casein, gelatin, whey protein, soy protein, wheat protein, rice protein and maize protein.

7. The composition according to any one of the preceding claims, which comprises an additional agent selected from the group consisting of a preservative, a filler, a colouring agent, a fragrance, a salt and a surfactant.

8. The composition according to any one of the preceding claims, wherein the composition comprises 0.05 to 2.5 weight % (based on total weight of composition) of the at least one primary beta (β)-alcohol amine.

9. The composition according to any one of the preceding claims, wherein the composition comprises 30 to 70 weight % (based on total weight of composition) water.

10. The composition according to any one of the preceding claims, wherein the composition comprises 1 to 40 weight % (based on total weight of composition) of the at least one starch component.

11. The composition according to any one of claims 4 to 10, wherein the composition comprises 0.1 to 5 weight % (based on total weight of composition) of the at least one antifoaming agent.

12. The composition according to any one of the preceding claims, wherein the composition comprises 1 to 40 weight % (based on total weight of composition) of the at least one liquefier.

13. A method for preparing the composition according to any one of claims 1 to 12, comprising
a) combining the components of the composition to obtain an aqueous composition,
b) heating the obtained aqueous composition,
c) cooling the obtained aqueous composition and
d) adjusting the pH value and the viscosity of the composition obtained in step c) so as to obtain the composition according to any one of claims 1 to 12.

14. A method for labeling containers, comprising the step of applying an aqueous adhesive composition to the back surface of a label and/or to the outer surface of a container, followed by the step of applying the label to the container, wherein the aqueous adhesive composition comprises:
a) at least one protein component,
b) at least one primary beta (β)-alcohol amine with at least two hydroxyl groups, and
c) water.

15. Use of an aqueous composition as adhesive for labeling, wherein said composition comprises:
a) at least one protein component,
b) at least one primary beta (β)-alcohol amine with at least two hydroxyl groups, and
c) water.

## Patentansprüche

1. Wässrige Zusammensetzung, wobei die Zusammensetzung umfasst:
a) 2 bis 40 Gew.-%, basierend auf dem Gesamtgewicht der Zusammensetzung, von zumindest einer Proteinkomponente,
b) zumindest ein primäres Beta (β)-Alkoholamin mit zumindest zwei Hydroxylgruppen, und
c) Wasser.

2. Zusammensetzung nach Anspruch 1, wobei das primäre Beta (β)-Alkoholamin TRIS (Tris(Hydroxymethyl-Aminomethan)) oder AEPD (2-Amino-2-Ethyl-1,3-Propandiol) ist.

3. Zusammensetzung nach Anspruch 1 oder 2, welche zumindest eine Stärkekomponente umfasst.

4. Zusammensetzung nach einem der vorstehenden Ansprüche, welche zumindest ein Entschäumungsmittel umfasst.

5. Zusammensetzung nach einem der vorstehenden Ansprüche, welche zumindest einen Verflüssiger ausgewählt aus der Gruppe bestehend aus Harnstoff, Ammoniumhydroxid, Ammoniumthiocyanat, Thioharnstoff und Dicyanodiamid umfasst.

6. Zusammensetzung nach einem der vorstehenden Ansprüche, wobei die Proteinkomponente ausgewählt ist aus der Gruppe bestehend aus Kasein, Gelatine, Molkenprotein, Sojaprotein, Weizenprotein, Reisprotein und Maisprotein.

7. Zusammensetzung nach einem der vorstehenden Ansprüche, welche umfasst ein zusätzliches Mittel ausgewählt aus der Gruppe bestehend aus einem Konservierungsmittel, einem Füllstoff, einem Farbstoff, einem Duftstoff, einem Salz und einem Tenside.

8. Zusammensetzung nach einem der vorstehenden Ansprüche, wobei die Zusammensetzung 0,05 bis 2,5 Gew.-% (basierend auf dem Gesamtgewicht der Zusammensetzung) des zumindest einen primären Beta (β)-Alkoholamins umfasst.

9. Zusammensetzung nach einem der vorstehenden Ansprüche, wobei die Zusammensetzung 30 bis 70 Gew.-% (basierend auf dem Gesamtgewicht der Zusammensetzung) Wasser umfasst.

10. Zusammensetzung nach einem der vorstehenden Ansprüche, wobei die Zusammensetzung 1 bis 40 Gew.-% (basierend auf dem Gesamtgewicht der Zusammensetzung) der zumindest einen Stärkekomponente umfasst.

11. Zusammensetzung nach einem der Ansprüche 4 bis 10, wobei die Zusammensetzung 0,1 bis 5 Gew.-% (basierend auf dem Gesamtgewicht der Zusammensetzung) des zumindest einen Entschäumungsmittels umfasst.

12. Zusammensetzung nach einem der vorstehenden Ansprüche, wobei die Zusammensetzung 1 bis 40 Gew.-% (basierend auf dem Gesamtgewicht der Zusammensetzung) des zumindest einen Verflüssigers umfasst.

13. Verfahren zum Herstellen der Zusammensetzung nach einem der Ansprüche 1 bis 12,
umfassend:
a) Kombinieren der Komponenten der Zusammensetzung um eine wässrige Zusammensetzung zu erhalten,
b) Erwärmen der erhaltenen wässrigen Zusammensetzung,
c) Kühlen der erhaltenen wässrigen Zusammensetzung und
d) Einstellen des pH Werts und der Viskosität der in Schritt c) erhaltenen Zusammensetzung, um die Zusammensetzung nach einem der Ansprüche 1 bis 12 zu erhalten.

14. Verfahren zum Etikettieren von Behältern, umfassend den Schritt des Aufbringens einer wässrigen Klebstoffzusammensetzung auf die Rückseitenoberfläche eines Etiketts und/oder auf die äußere Oberfläche eines Behälters, gefolgt von dem Schritt des Aufbringens des Etiketts auf den Behälter, wobei die wässrige Klebstoffzusammensetzung umfasst:
a) zumindest eine Proteinkomponente,
b) zumindest ein primäres Beta (β)-Alkoholamin mit zumindest 2 Hydroxylgruppen, und
c) Wasser.

15. Verwendung einer wässrigen Zusammensetzung als Klebstoff zum Etikettieren, wobei die Zusammensetzung umfasst:
a) zumindest eine Proteinkomponente,
b) zumindest ein primäres Beta (β)-Alkoholamin mit zumindest zwei Hydroxylgruppen und
c) Wasser.

## Revendications

1. Une composition aqueuse, laquelle composition comprend :
a) 2 à 40% en poids sur la base du poids total de la composition, d'au moins un composant protéique,
b) au moins une amine bêta (β)-alcool primaire avec au moins deux groupes hydroxyle, et
c) de l'eau.

2. La composition selon la revendication 1, dans laquelle l'amine bêta (β)-alcool primaire est le TRIS [tris-(hydroxyméthyl-aminométhane)) ou l'AEPD (2-amino-2-éthyl-1,3-propanediol).

3. La composition selon la revendication 1 ou 2, qui comprend au moins un composant d'amidon.

4. La composition selon l'une quelconque des revendications précédentes, qui comprend au moins un agent antimousse.

5. La composition selon l'une quelconque des revendications précédentes, qui comprend au moins un agent liquéfacteur choisi dans le groupe constitué par l'urée, l'hydroxyde d'ammonium, le thiocyanate d'ammonium, la thiourée et le dicyanodiamide.

6. La composition selon l'une quelconque des revendications précédentes, dans laquelle le composant protéique est choisi dans le groupe constitué par la caséine, la gélatine, une protéine de lactosérum, une protéine de soja, une protéine de blé, une protéine de riz et une protéine de maïs.

7. La composition selon l'une quelconque des revendications précédentes, qui comprend un agent additionnel choisi dans le groupe constitué par un agent conservateur, un agent de remplissage, un colorant, un parfum, un sel et un agent tensioactif.

8. La composition selon l'une quelconque des revendications précédentes, dans laquelle la composition comprend de 0,05 à 2,5% en poids (sur la base du poids total de la composition) de ladite au moins une amine bêta (β)-alcool primaire.

9. La composition selon l'une quelconque des revendications précédentes, dans laquelle la composition comprend 30 à 70% en poids (sur la base du poids total de la composition) d'eau.

10. La composition selon l'une quelconque des revendications précédentes, dans laquelle la composition comprend de 1 à 40% en poids (sur la base du poids total de la composition) d'au moins un composant d'amidon.

11. La composition selon l'une quelconque des revendications 4 à 10, dans laquelle la composition comprend de 0,1 à 5% en poids (sur la base du poids total de la composition) d'au moins un agent antimousse.

12. La composition selon l'une quelconque des revendications précédentes, dans laquelle la composition comprend de 1 à 40% en poids (sur la base du poids total de la composition) d'au moins un agent liquéfacteur.

13. Un procédé pour préparer la composition selon l'une quelconque des revendications 1 à 12, comprenant
a) le mélange des composants de la composition pour obtenir une composition aqueuse,
b) le chauffage de la composition aqueuse obtenue,
c) le refroidissement de la composition aqueuse obtenue et
d) l'ajustement de la valeur du pH et de la viscosité de la composition obtenue dans l'étape c), de façon à obtenir la composition selon une quelconque des revendications 1 à 12.

14. Un procédé d'étiquetage de récipients, comprenant l'étape d'application d'une composition adhésive aqueuse sur la surface arrière d'une étiquette et/ou sur la surface extérieure d'un récipient, suivie de l'étape d'application de l'étiquette sur le récipient, dans lequel la composition adhésive aqueuse comprend:
a) au moins un composant protéique,
b) au moins une amine bêta (β)-alcool primaire avec au moins deux groupes hydroxyle, et
c) de l'eau.

15. Utilisation d'une composition aqueuse en tant qu'adhésif pour l'étiquetage, dans laquelle ladite composition comprend:
a) au moins un composant protéique,
b) au moins une amine bêta (β)-alcool primaire avec au moins deux groupes hydroxyle, et
c) de l'eau.
